# EUROPEAN PATENT APPLICATION

(11) **EP 1 845 426 A1**
(43) Date of publication of application: **17.10.2007**
(21) Application number: 07007419.0
(22) Date of filing: 11.04.2007
(51) Int. Cl.: G04G 9/00

(54) **Wristwatch**

(30) Priority: 13.04.2006 JP 2006110680
(71) Applicant: Seiko Epson Corporation, Shinjuku-ku, Tokyo 163-0811 (JP)
(72) Inventor: Inoue, Katsutoyo, Suwa-shi Nagano-ken 392-8502 (JP); Seki, Shigeaki, Suwa-shi Nagano-ken 392-8502 (JP)
(74) Representative: HOFFMANN EITLE

(57) **Abstract**

A wristwatch having a display unit with memory that retains the display state of a last preceding display update operation, and a solar cell for displaying operating power at least to the display unit with memory during the display update operation. The display unit with memory and the solar cell render a dial or a display panel.

## Description

### BACKGROUND OF THE INVENTION

1. Field of Invention

The present invention relates generally to wristwatches and relates more particularly to a wristwatch having a solar cell and a display with memory.

2. Description of Related Art

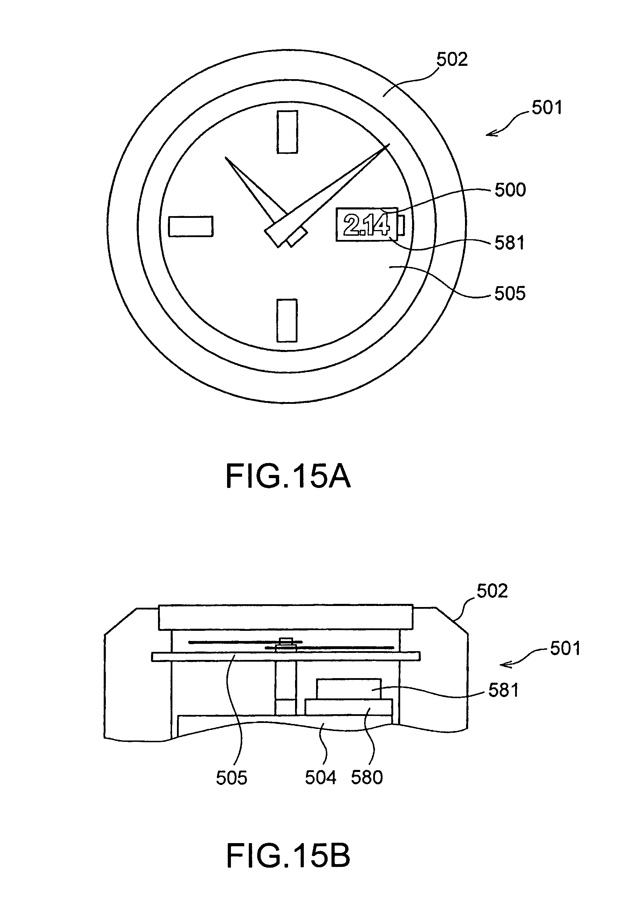

FIG. 15 shows a plan view and section view of a wristwatch that has a liquid crystal display visible through a window in the dial.

More particularly, FIG. 15 shows a wristwatch 501 that has an LCD panel 581 located in a window 500 that is formed in the dial 505 disposed in the case member 502, and displays the date by illuminating the LCD panel 581 from behind with a backlight 580 as known from the literature. Note that reference numeral 504 in FIG. 15 denotes the movement.

Because the LCD panel 581 is dynamically driven, however, power consumption is high and an LCD panel 581 with a confined display area is therefore used in order to reduce power consumption in solar timepieces that have an LCD panel 581. As a result, the LCD panel 581 has a narrow viewing angle and is difficult to read because the display is recessed. LCD segment displays with low power consumption are therefore generally used even though the displayable content is limited.

Furthermore, because the conversion efficiency of solar cells is not necessarily high and solar cell generating capacity is proportional to the area of the solar cell, a solar cell with a large light reception area (such as the size of the dial) must be used in order to drive the LCD panel in this timepiece.

Such solar-powered wristwatches having the solar cell disposed in a ring on the dial are also known, but using the timepiece with the solar cell exposed to view reduces the attractiveness of the timepiece.

To solve this problem, Japanese Unexamined Patent Appl. Pub.
JP-A-H10-253773 teaches a wristwatch that improves the design of a wristwatch with a solar cell by covering the top of the solar cell with a transparent decorative panel.

Visual appeal is thus conventionally improved by covering the surface of the solar cell disposed to the dial with a decorative piece.

However, because the generating capacity of the solar cell is proportional to the amount of light received and the area of the light reception surface, and the light reception area of a solar cell used in a wristwatch is small, the solar cell may not be able to produce sufficient power if an opaque display is disposed above or in the same plane as the solar cell.

### SUMMARY OF THE INVENTION

A wristwatch according to the present invention improves the design and easily affords practical use even when the area for disposing a display device competes with the area for disposing a solar cell due to device size and a large light reception area cannot be provided for the solar cell.

A wristwatch according to a preferred aspect of the invention has a display unit with memory that retains the display state of a last preceding display update operation, and a solar cell for displaying operating power at least to the display unit with memory during the display update operation, wherein the display unit with memory and the solar cell render a dial or a display panel.

When the space available for disposing the dial or display panel, and therefore the space available for the display unit with memory and solar cell, is limited as in a wristwatch so that increasing the space for one reduces the space for the other, the invention enables providing sufficient power for practical use without impairing the utility or aesthetic design.

Furthermore, because power consumption can be reduced by using a display unit with memory, the display unit with memory can be used in combination with a solar cell disposed in a limited space. The combination of this solar cell and display unit with memory also affords an outstanding energy conservation effect.

Preferably, the display surface of the display unit with memory and the light reception surface of the solar cell are disposed substantially on the same plane. Further preferably, a virtual plane substantially parallel to the light reception surface of the solar cell and the display surface of the display unit with memory is defined, and the solar cell and display unit with memory are disposed so that orthogonal projections of the light reception surface of the solar cell and the display surface of the display unit with memory onto this virtual plane do not overlap.

In another aspect of the invention the light reception surface of the solar cell and the display surface of the display unit with memory are rendered with one being round and the other having an annular shape surrounding the first.

Further preferably, the wristwatch also has a mask member for covering and thereby masking a border between the solar cell and the display unit with memory.

In a wristwatch according to another aspect of the invention the solar cell and the display unit with memory are rendered in unison as a module.

In a wristwatch according to another aspect of the invention the display unit with memory displays at least either calendar information or world time information.

Further preferably, the wristwatch also has an RF signal reception unit for receiving an information signal from an external source, and the display unit with memory displays information contained in the received information signal.

In a wristwatch according to another aspect of the invention the information contained in the information signal is image information; and the display unit with memory displays an image corresponding to the image information.

In a wristwatch according to another aspect of the invention the information contained in the information signal is time-setting information; and the time-setting information receiving operation for receiving the time-setting information is prohibited when power output from the solar cell is less than or equal to a predetermined time-setting level. As a result, the operation for adjusting the time can also be prohibited.

The wristwatch according to another aspect of the invention also has a decorative panel disposed on the front side of the light reception surface of the solar cell and the display surface of the display unit with memory, and the decorative panel has decoration imparted thereto in an area corresponding to the light reception surface, and has a window or is transparent in an area corresponding to the display surface.

In one aspect of the invention the display unit with memory is rendered using a colloidal electronic paper.

In another aspect of the invention the display unit with memory is rendered using a cholesteric liquid crystal layer.

Further preferably, the display unit with memory is driven by a TFT active matrix drive method.

Further preferably, updating the display state of the display unit with memory is prohibited when solar cell output is less than or equal to a predetermined display level. Yet further preferably, the display state of the display unit with memory is updated with priority when solar cell output again exceeds the predetermined display level.

When the space available for disposing the dial or display panel, and therefore the space available for the display unit with memory and solar cell, is limited as in a wristwatch so that increasing the space for one reduces the space for the other, the invention enables providing sufficient power for practical use without impairing the utility or aesthetic design.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a plan view of a wristwatch according to a preferred embodiment of the invention.

FIG. 2 is a side section view of the wristwatch.

FIG. 3 shows the movement of the wristwatch.

FIG. 4 is a block diagram showing the electrical arrangement of the wristwatch.

FIG. 5 describes the initial state of the display panel with memory.

FIG. 6 shows the display panel with memory in a first operating state.

FIG. 7 shows the display panel with memory in a second operating state.

FIG. 8 is a plan view of a wristwatch according to another aspect of the invention.

FIG. 9 is a section view of the wristwatch shown in FIG. 8.

FIG. 10 is a plan view of a wristwatch according to another aspect of the invention.

FIG. 11 is a block diagram showing the electrical arrangement of this other aspect of the invention.

FIG. 12 is a section view of another display panel with memory.

FIG. 13 is a plan view of a solar-powered calculator that has a timekeeping function according to another aspect of the invention.

FIG. 14 is a block diagram showing the electrical arrangement of the solar-powered calculator.

FIG. 15 is a plan view and a section view of a wristwatch in which a liquid crystal display is visible through a window rendered in the dial.

### DESCRIPTION OF THE PREFERRED EMBODIMENTS

Preferred embodiments of the present invention are described below with reference to the accompanying figures.

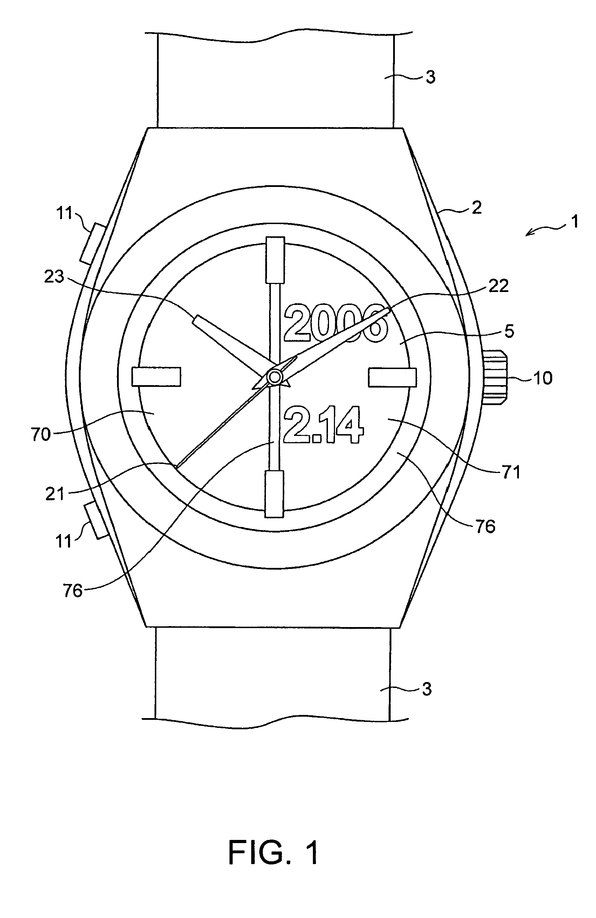

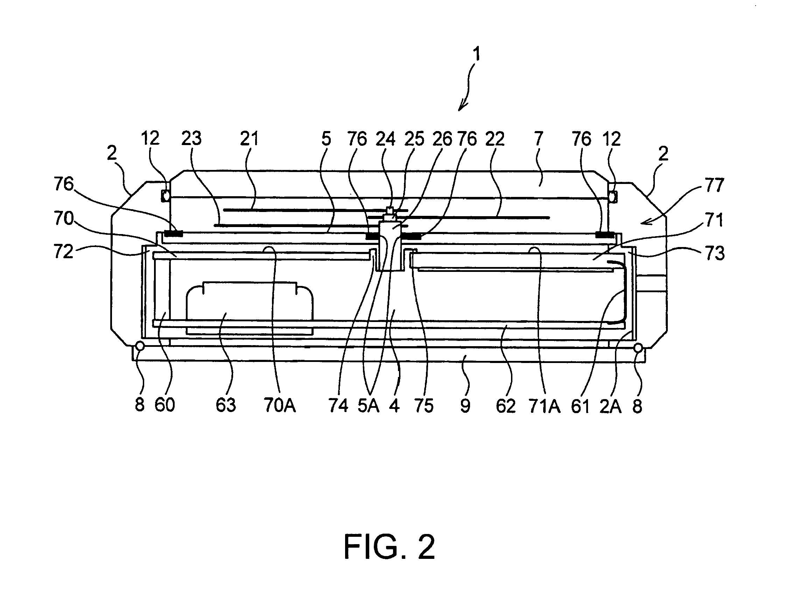

FIG. 1 is a plan view of a wristwatch 1 according to a preferred embodiment of the invention, and FIG. 2 is a side section view of the wristwatch 1. The wristwatch 1 has a timepiece case (case member) 2, and a pair of bands 3 connected to the case member 2. The timepiece case 2 is made from stainless steel or other metal or a plastic molding, for example, and has an internal cavity 2A for housing a movement 4 and a decorative panel 5.

A glass or plastic crystal 7 is fit into one end of the internal cavity 2A in the timepiece case 2 (that is, on the face side) with a seal 12 between the crystal 7 and timepiece case 2. A back cover 9 is screwed into the other end of the internal cavity 2A (on the back side of the timepiece) with a seal 8 between the back cover 9 and the case so that the back cover 9 and the crystal 7 seal the inside of the timepiece case 2.

As shown in FIG. 1 a crown 10 and operating buttons 11 are disposed as operating members in the timepiece case 2.

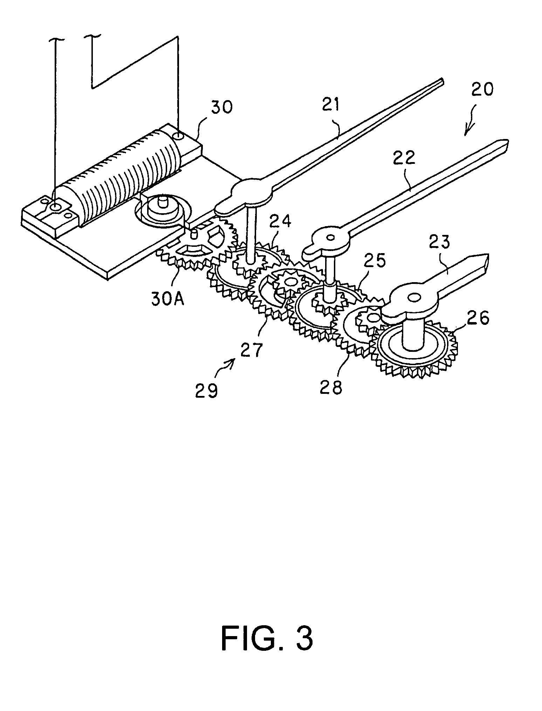

As shown in FIG. 3, the movement 4 has a movement assembly 20 with a second hand 21, minute hand 22, and hour hand 23. The movement assembly 20 functions as a time display unit for displaying the current time by driving these analog hands 21 to 23 rotationally.

More specifically, the movement assembly 20 has a wheel train 29 that is interconnected by intermediate wheels 27 and 28 so that the second hand wheel 24, second wheel 25, and center wheel 26 move in unison. One end of the second hand 21 is attached to the rotating shaft of the second hand wheel 24, one end of the minute hand 22 is attached to the rotating shaft of the second wheel 25, and one end of the hour hand 23 is attached to the rotating shaft of the center wheel 26. The second hand wheel 24 meshes with the drive wheel 30A of the drive motor 30. Driving the drive motor 30 drives the second hand wheel 24 rotationally, and this rotation is transferred to the second wheel 25 and the center wheel 26, thus causing the second hand 21, the minute hand 22, and the hour hand 23 to rotate so that the time is displayed by the hands 21 to 23.

Note that for understanding the second hand wheel 24, the second wheel 25, and the center wheel 26 are not shown coaxially in FIG. 3, but are disposed coaxially in the actual wristwatch 1 as shown in FIG. 1.

As shown in FIG. 2, the decorative panel 5 is disposed on the timepiece face side of the movement 4. A through-hole 5A is formed in the center of the decorative panel 5, the shafts of the second hand wheel 24, the second wheel 25, and the center wheel 26 in the movement 4 pass through this through-hole 5A, and the second hand 21, the minute hand 22, and the hour hand 23 are respectively mounted on the distal ends of these shafts.

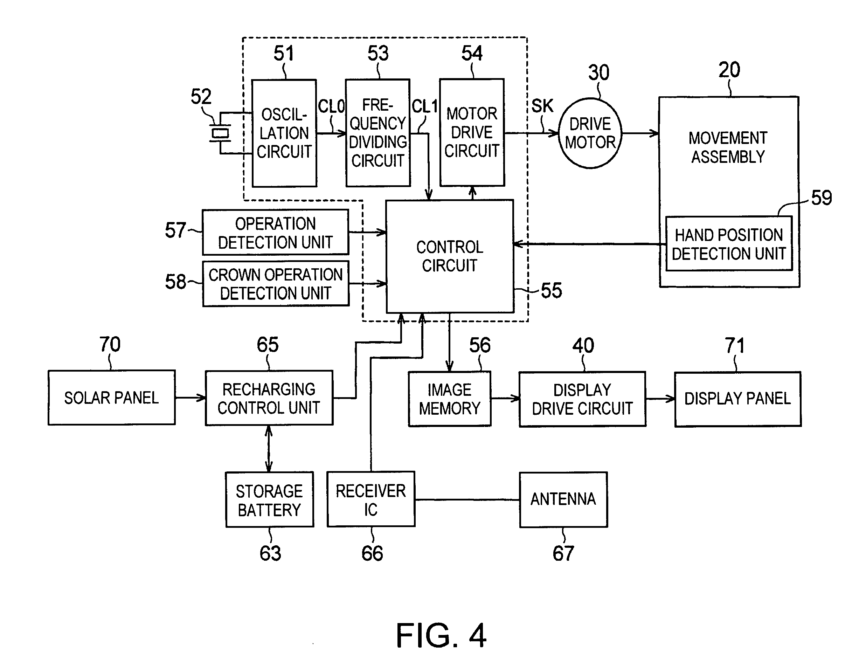

FIG. 4 shows the electrical arrangement of the wristwatch 1.

The oscillation circuit 51 causes an oscillator 52 to vibrate to output a 32-kHz reference clock signal CL0, for example, and the frequency dividing circuit 53 frequency divides the reference clock signal CL0 to a 1-Hz clock signal CL1 and outputs the clock signal CL1 to the control circuit 55. The motor drive circuit 54 supplies a drive signal SK to the drive motor 30 as controlled by the control circuit 55 to drive the movement assembly 20 and drive the second hand 21, the minute hand 22, and the hour hand 23 rotationally.

The control circuit 55 is the central control processor of the wristwatch 1, includes a CPU, ROM, and RAM, and the CPU controls the parts of the wristwatch 1 by running a control program stored in ROM. The control circuit 55 has a timekeeping means for keeping the date (or time) by counting signals of a predetermined frequency output from the frequency dividing circuit 53 by means of a software process or hardware operation (such as counters). To display the date in this aspect of the invention, the date information is written to an image memory 56 and a display drive circuit 40 displays the calendar information on the display panel with memory (display unit with memory) 71.

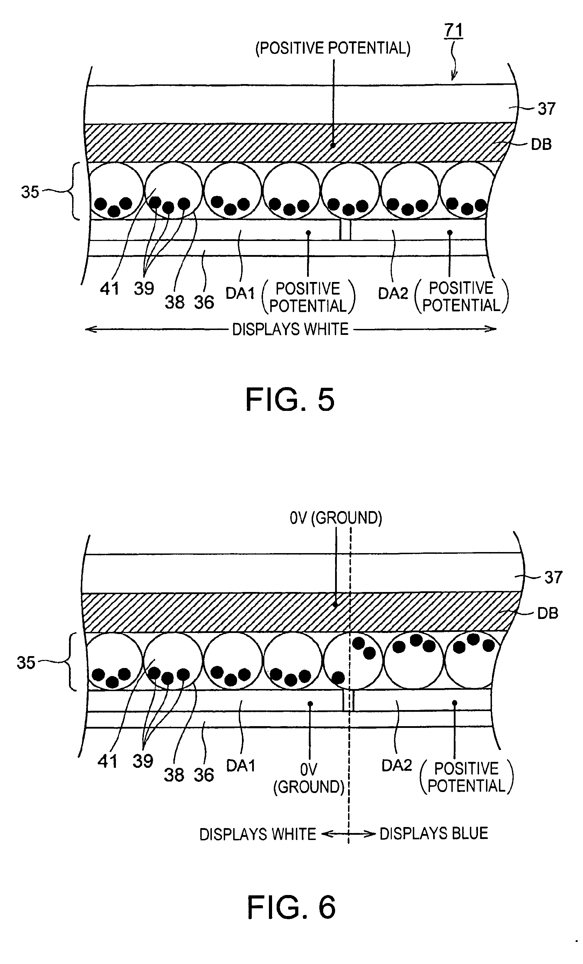

This display panel with memory 71 is rendered using colloidal electronic paper with an electrophoretic layer, and as shown in FIG. 5 has the electrophoretic layer 35 disposed between a mounting substrate 36 and a transparent substrate 37. Segment electrodes DA are disposed on the top of the mounting substrate 36 (the side facing the transparent substrate 37). A transparent common electrode DB is rendered by vapor deposition of ITO (indium-tin oxide) on the bottom of the transparent substrate 37 (the side facing the mounting substrate 36) . The display drive circuit 40 is connected to each of the electrodes DA and DB.

The electrophoretic layer 35 contains many microcapsules 38, and each of the microcapsules 38 contains an electrophoretic suspension 41 of electrophoretic particles 39. In this aspect of the invention the electrophoretic particles 39 are positively charged blue particles and the electrophoretic suspension 41 is white, rendering a so-called single-particle electrophoretic layer.

The operation of a display panel with memory is described next.

FIG. 5 describes the initial state of the display panel with memory.

If in this initial state the common electrode DB of the display panel with memory 71 is positively charged by the display drive circuit 40 and the segment electrodes DA1 and DA2 are also positive, voltage is not applied between the common electrode DB and the segment electrodes DA1 and DA2. The electrophoretic particles 39 that are attracted to the segment electrodes DA1 and DA2 side therefore remain there, and the display panel with memory 71 displays the white color of the electrophoretic suspension 41.

FIG. 6 shows the display panel with memory in a first operating state.

If in the initial state shown in FIG. 5 the display drive circuit 40 holds the common electrode DB at 0 V (ground) and also continues to hold the segment electrode DA1 to 0 V (ground) so that voltage is not applied in the area corresponding to the segment electrode DA1, there is no movement in the electrophoretic particles 39 and electrophoretic suspension 41, and the display area corresponding to this segment electrode DA1 continues to display white.

A positive drive voltage is applied to the segment electrode DA2, however, creating a field from the segment electrode DA2 to the common electrode DB. This causes the positively charged electrophoretic particles 39 in the microcapsules 38 to migrate to the common electrode DB side and the white electrophoretic suspension 41 to migrate to the segment electrode DA side. The microcapsules 38 that are visible from the transparent substrate 37 side therefore turn blue in the display area corresponding to the segment electrode DA2, and the display area controlled by the segment electrode DA2 appears blue.

The content displayed in the area corresponding to the segment electrode DA2 therefore appears to be floating above the background.

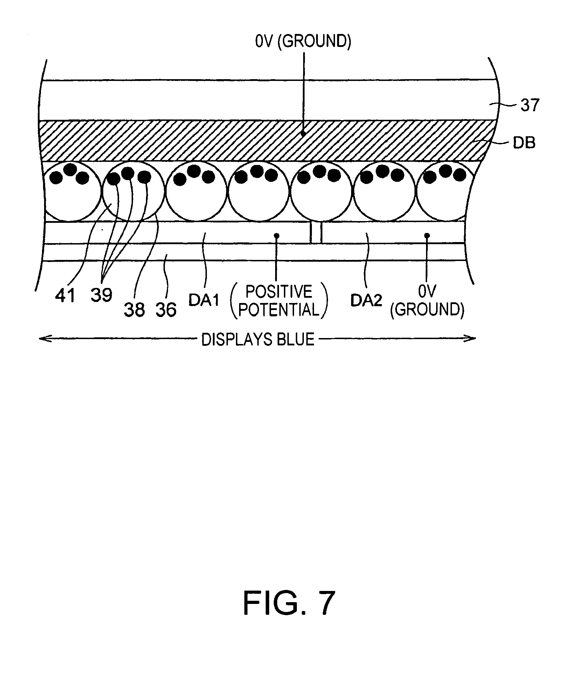

FIG. 7 shows the display panel with memory in a second operating state.

If in the state shown in FIG. 6 the display drive circuit 40 holds the common electrode DB to 0 V (ground) and applies a positive charge to the segment electrode DA1, a field is produced from the segment electrode DA1 to the common electrode DB causing the positively charged electrophoretic particles 39 in the microcapsules 38 to migrate to the common electrode DB side and the white electrophoretic suspension 41 to migrate to the segment electrode DA1 side. The microcapsules 38 that are visible from the transparent substrate 37 side therefore also turn blue in the display area corresponding to the segment electrode DA1, and the display area controlled by the segment electrode DA1 appears blue.

If the display drive circuit 40 also drives the segment electrode DA2 to 0 V (ground), a voltage is also applied in the display area corresponding to the segment electrode DA2, the electrophoretic particles 39 and electrophoretic suspension 41 do not move, and the display area corresponding to the segment electrode DA2 also continues to display blue.

As a result, the display areas controlled by the segment electrodes DA1 and DA2 both present blue.

The electrophoretic (blue) particles 39 thus do not move when there is no potential difference between the common electrode DB and the segment electrode DA1 or the segment electrode DA2, the display color of the corresponding segment does not change, and the previous display state is remembered.

The display drive circuit 40 in this aspect of the invention has an internal voltage booster, boosts the voltage (such as 3 V or 1. 5 V) supplied from the power source to +12 V, and applies this +12-V positive charge or 0 V as the drive voltage to the segment electrodes DA1 and DA2 and common electrode DB.

The operation detection unit 57 detects and reports operation of the operating buttons 11 to the control circuit 55. The crown operation detection unit 58 detects when the crown 10 is pushed in and when the crown 10 is turned, and reports the result to the control circuit 55.

In this embodiment of the invention the crown 10 turns freely when at the zero stop position (that is, pushed all the way into the timepiece case 2 (the position shown in FIG. 1)). When the crown 10 is pulled out to the first stop and turned, the crown operation detection unit 58 detects and reports how far the crown 10 is turned to the control circuit 55, and the control circuit 55 adjusts the date. A method of optically or electrically (that is, using a contactless or contact method) detecting rotation of the crown 10 can be used to detect how much the crown 10 is rotated.

When the crown 10 is pulled out to the second stop, rotating the crown 10 drives the wheel train 29 of the movement assembly 20 to adjust the time according to how far the crown 10 is turned. Instead of a manual method in which the crown 10 directly drives the wheel train 29, an electronic method in which the crown operation detection unit 58 tells the control circuit 55 how far the crown 10 is turned and the control circuit 55 controls the motor drive circuit 54 to drive the drive motor 30 a distance corresponding to the rotation of the crown 10.

This wristwatch 1 also has a hand position detection unit 59 for detecting the position of the second hand 21, the minute hand 22, and the hour hand 23, and the hand position detection unit 59 reports the rotational positions of the analog hands 21 to 23 to the control circuit 55. The hand position detection unit 59 can detect the amount of rotation using a rotation detector (rotary encoder) (using an absolute method or a relative method (determining the rotational positions by dividing rotation of the hour hand 23 by 86,400 or 43,200, dividing the hour hand 23 position into second hand wheel 24 or packing 12 parts, the minute hand 22 position into 60 parts, and the second hand 21 position into 60 parts)), or using an optical or electrical (that is, a contactless or contact) method to detect the rotational positions of the analog hands 21 to 23.

In this aspect of the invention the plural circuits (the control circuit 55, the oscillation circuit 51, the frequency dividing circuit 53, and the motor drive circuit 54) enclosed in the dotted line in FIG. 4 are rendered on the same IC (integrated circuit) chip. The image memory 56 and display drive circuit 40 can also be rendered on the same IC chip, and further alternatively the image memory 56, the display drive circuit 40, and the control circuit 55 could be rendered on the same IC chip.

The hand position detection unit 59 is also not limited to an arrangement using rotational detectors, and could use an arrangement that uses an internal counter to keep (count) the same time as the time that is displayed by the analog hands and detects the positions of the analog hands from the count of this internal counter. More specifically, in order to set the time of the internal counter to the same time indicated by the analog hands, the operating buttons 11 are operated when the crown is at the first stop (electronic time setting operation) to set the analog hands to an initial position (such as 24:00) and set the internal counter to an initial value corresponding to the initial position of the analog hands, and then operate the operating buttons 11 with the crown 10 at a second stop (electronic time setting operation) to set the analog hands to the position of the current time and increment or decrement the internal counter according to this setting to set the internal counter to a value corresponding to the current time. This arrangement does not require detectors and therefore enables reducing the number of internal parts and the size and thickness of the wristwatch 1.

In this embodiment of the invention the control circuit 55 adjusts the date before 0:00 every night, and based on the time information updates the time indicated by the analog hands and the day and date displayed on the display panel with memory 71.

The receiver IC 66 (radio frequency reception unit) is a receiver for receiving RF signals, and receives a standard time signal containing the current time for setting the time of the wristwatch 1 at a predetermined time (such as at 2:00 a.m. or 4:00 a.m.) every day. The receiver IC 66 converts the received standard time signal to time information and outputs to the control circuit 55. The control circuit 55 then adjusts the time based on this time information. In this arrangement the time at which the standard time signal is received is set exclusively to the date adjustment operation due to current consumption and electromagnetic interference considerations.

In this case the transmitter of the received signal, the country of the transmitter of the received signal, the strength of the received signal, the difficulty of reception based on the number of times signal reception was attempted (the retry count), and the range of assured precision based on the amount of time passed since the standard time signal was last received are displayed on the display panel with memory 71 when the standard time signal is received.

The recharging control unit 65 is connected to the control circuit 55, the solar panel 70 (solar cell), and the storage battery 63. The recharging control unit 65 supplies power generated by the solar panel 70 or power stored in the storage battery 63 to the control circuit 55, and supplies power generated by the solar panel 70 to the storage battery 63 for storage.

The recharging control unit 65 sends the charge state to the control circuit 55. This enables the control circuit 55 to prohibit updating the display state of the display panel with memory 71 or prohibit the time adjustment operation when, for example, power output by the solar panel 70 is insufficient and the wristwatch 1 cannot be powered without using power stored in the storage battery 63.

Conversely, when sufficient power can again be derived from the solar panel 70 after a period in which the solar panel does not produce enough power, the control circuit 55 can immediately (preferentially) update the display state of the display panel with memory 71 in order to compensate for any loss of the displayed content.

The solar panel 70 and the display panel with memory 71 render the dial and are disposed on the back side of the decorative panel 5. As shown in FIG. 1 and FIG. 2 the decorative panel 5 is round, the semicircular part on the left side of the center (light reception surface 70A is rendered decoratively while passing light, and the semicircular part on the right side (display surface 71A is transparent so that the back side of the decorative panel 5 is visible.

The solar panel 70 is semicircular and is disposed behind the semicircle on the left side where decoration is imparted to the decorative panel 5. This solar panel 70 is preferably a high efficiency, opaque panel such as a rigid amorphous solar panel or a flexible film solar panel. As shown in FIG. 2, the solar panel 70 is supported by a bridge and support structure 77 formed at the top end of the movement 4. The storage battery 63 is located inside the movement 4 behind the solar panel 70.

The solar panel 70 side of the bridge and support structure 77 includes an inside support unit 74 formed along the outside of the center wheel 26, and an outside support unit 72 formed along the inside circumference of the internal cavity 2A.

The display panel with memory 71 is also semicircular like the solar panel 70, and is disposed behind the transparent semicircular part on the right side of the decorative panel 5.

In this case a virtual plane substantially parallel to the light reception surface 70A of the solar panel 70 and the display surface 71A of the display panel with memory 71 is set, and the solar panel 70 and display panel with memory 71 are disposed substantially on the same plane so that there is no overlap in the orthogonal projections of the light reception surface 70A of the solar panel 70 and the display surface 71A of the display panel with memory 71 onto this virtual plane.

Calendar information such as the day and date, world time information such as the name of a place corresponding to the time indicated by the analog hands 21 to 23, an image based on image information acquired by the receiver IC 66, operating instructions stored in ROM, or an image stored in a memory card or internal image memory not shown may be displayed on the display panel with memory 71.

The display panel with memory 71 is supported by the bridge and support structure 77 rendered at the top end of the movement 4. Similarly to the solar panel 70, the display panel with memory 71 side of the bridge and support structure 77 includes an inside support unit 75 formed around the outside of the center wheel 26, and an outside support unit 73 rendered along the inside wall of the internal cavity 2A. A mask 76 that covers and hides (masks) the border between the solar panel 70 and the display panel with memory 71, and also masks the bridge and support structure 77, is disposed above the decorative panel 5 on the face side of the bridge and support structure 77.

As a result, the border between the solar panel 70 and the display panel with memory 71 is not visible to the user and the aesthetic design is not impaired.

The light reception surface 70A of the solar panel 70 and the display surface 71A of the display panel with memory 71 are supported by the bridge and support structure 77 so that they are on substantially the same plane substantially parallel to the crystal 7 and the decorative panel 5, and are electrically connected to the circuit board 62 in the movement 4 by conductive parts 60 and 61.

The solar panel 70, the display panel with memory 71, and the conductive parts 60 and 61 are supported by the timepiece case 2 by means of the bridge and support structure 77, thus assuring more reliable conductivity between the solar panel 70 and conductive part 60, and between the display panel with memory 71 and the conductive part 61, and preventing damage to the solar panel 70 and display panel with memory 71 if the wristwatch 1 is dropped, for example. This arrangement also minimizes the thickness of the timepiece case 2 because the bridge and support structure 77 supports these parts only at the edges and does not intervene between them.

By using a display panel with memory 71 that retains the display state resulting from the last display update operation, a wristwatch 1 according to this embodiment of the invention has low power consumption and can supply sufficient power to drive all wristwatch 1 operations using a solar panel 70 with a light reception area that is only approximately half of the size of the dial.

Furthermore, by disposing the light reception surface 70A of the solar panel 70 and the display surface 71A of the display panel with memory 71 on substantially the same plane substantially parallel to the crystal 7, the distance from the crystal 7 is the same on both right and left sides so that the dial does not appear unnecessarily odd to the user. Because the solar panel 70 is thinner than the display panel with memory 71, a movement 4 that is thin overall can be rendered by disposing the relatively thick storage battery 63 behind the solar panel 70.

This embodiment of the invention also affords an outstanding energy conservation effect by using the display panel with memory 71 and the solar panel 70 in combination. More specifically, because the power consumption of the display panel with memory 71 is low, a solar panel 70 with a small surface area can produce sufficient power to drive the display panel with memory 71. A solar panel 70 disposed in a limited space can therefore be used to drive a display with a wide range of practical applications. The energy conservation afforded by using the solar panel 70 in combination with the display panel with memory 71 is therefore particularly effective.

This embodiment of the invention also affords good readability without the display appearing recessed as a result of using the solar panel 70 and the display panel with memory 71 to render the dial or display panel.

The solar panel 70 and display panel with memory 71 are rendered as separate parts in this aspect of the invention, but the invention is not so limited. More particularly, the solar panel 70 and the display panel with memory 71 can be rendered together as a single module. This arrangement reduces the part count and facilitates assembly.

The display panel with memory 71 side of the decorative panel 5 is transparent in this aspect of the invention, but the invention is not so limited. The decorative panel 5 can be rendered with a window instead, for example.

This embodiment of the invention also sets a virtual plane that is substantially parallel to the light reception surface 70A of the solar panel 70 and the display surface 71A of the display panel with memory 71, and disposes the solar panel 70 and display panel with memory 71 on substantially the same plane so that there is no overlap in the orthogonal projections of the light reception surface 70A of the solar panel 70 and the display surface 71A of the display panel with memory 71 onto this virtual plane, but the invention is not so limited. The light reception surface 70A of the solar panel 70 and the display surface 71A of the display panel with memory 71 could, however, be disposed in rings or with curved surfaces.

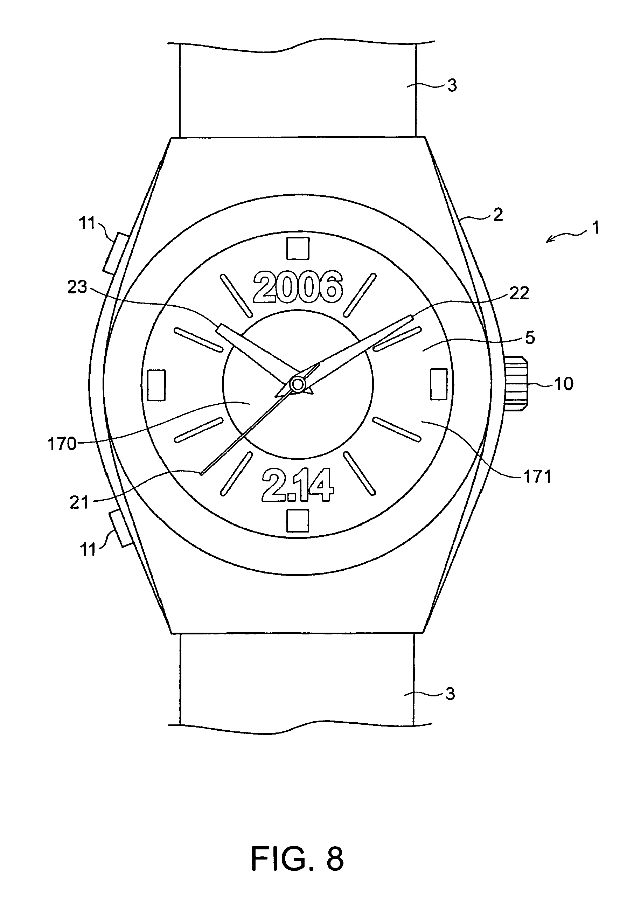

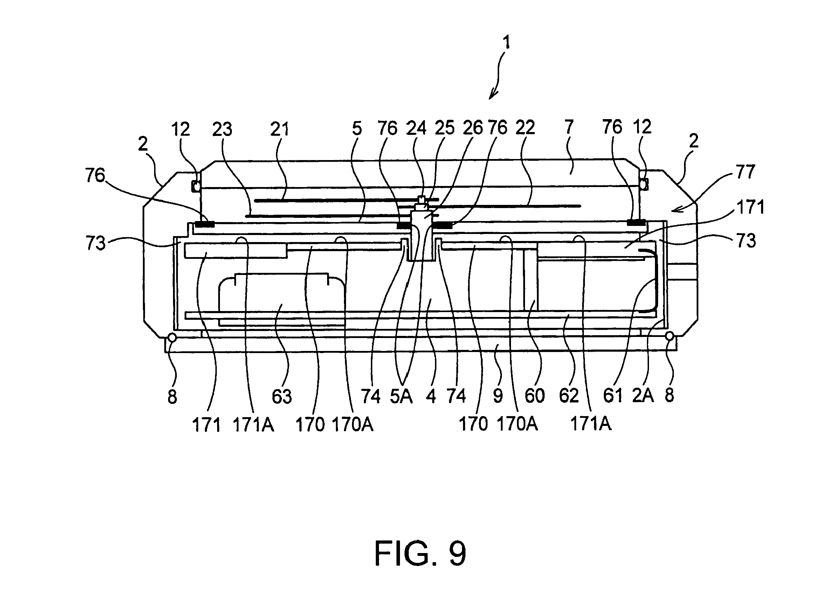

FIG. 8 is a plan view of a wristwatch according to another aspect of the invention. FIG. 9 is a section view of this variation.

In the embodiment described above the solar panel 70 and the display panel with memory 71 are disposed on right and left sides of the dial, but the invention is not so limited. As shown in FIG. 8 and FIG. 9, for example, an annular (ring or donut-shaped) display panel 171 can be disposed concentrically to the decorative panel 5 and a round solar panel 170 can be disposed concentrically inside the display panel 171. This aspect of the invention affords the same benefits described above.

Further alternatively an annular (ring or donut-shaped) solar panel can be disposed concentrically to the decorative panel 5 with a round display panel concentrically disposed inside the solar panel. In this arrangement the cells of the solar panel 70 can be shaped to accommodate disposing hour markers in the gaps between the cells.

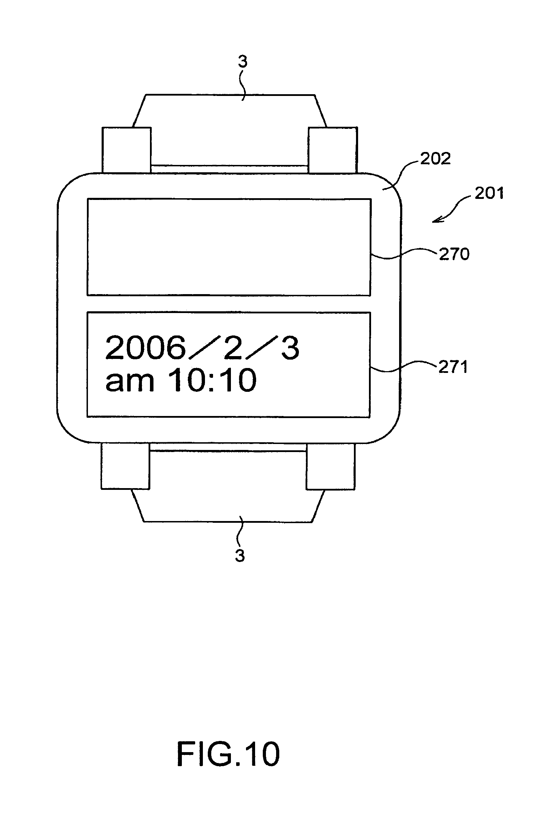

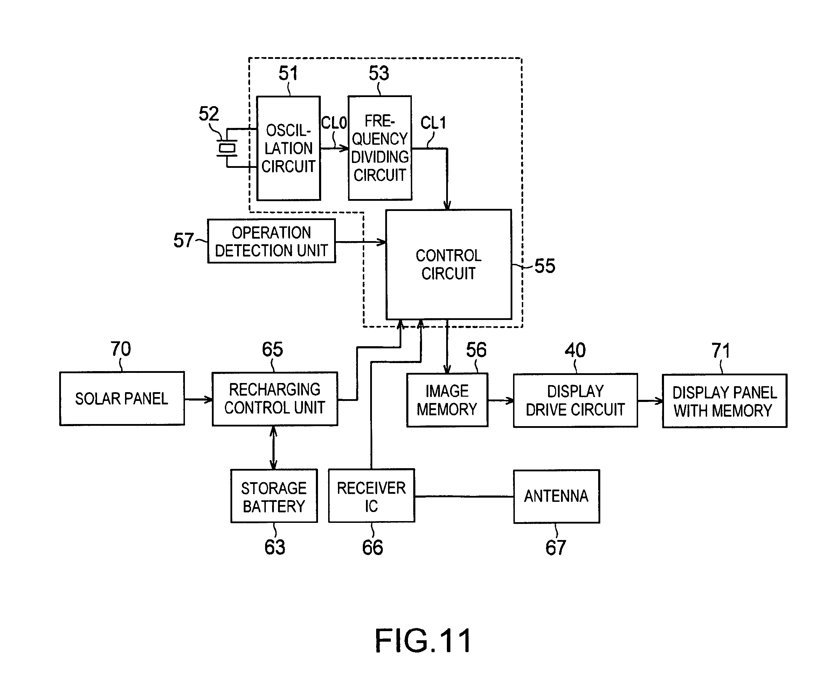

FIG. 10 is a plan view of a wristwatch according to another aspect of the invention. FIG. 11 is a block diagram showing the electrical arrangement of this variation.

The wristwatch described above has analog hands 21 to 23, a display panel with memory 71, and a solar panel 70, but the invention is not so limited. As shown in FIG. 10 and FIG. 11, for example, the present invention can also be used with a digital wristwatch that has a solar panel 270 and a display panel 271 disposed to a timepiece case 202, and does not have analog hands and a dial. This aspect of the invention affords the same benefits described above.

The date is displayed on the display panel with memory 271 in the variation shown in FIG. 10, but the invention is not so limited. A digital thermometer, a digital calendar, or a digital schedule could be displayed, for example.

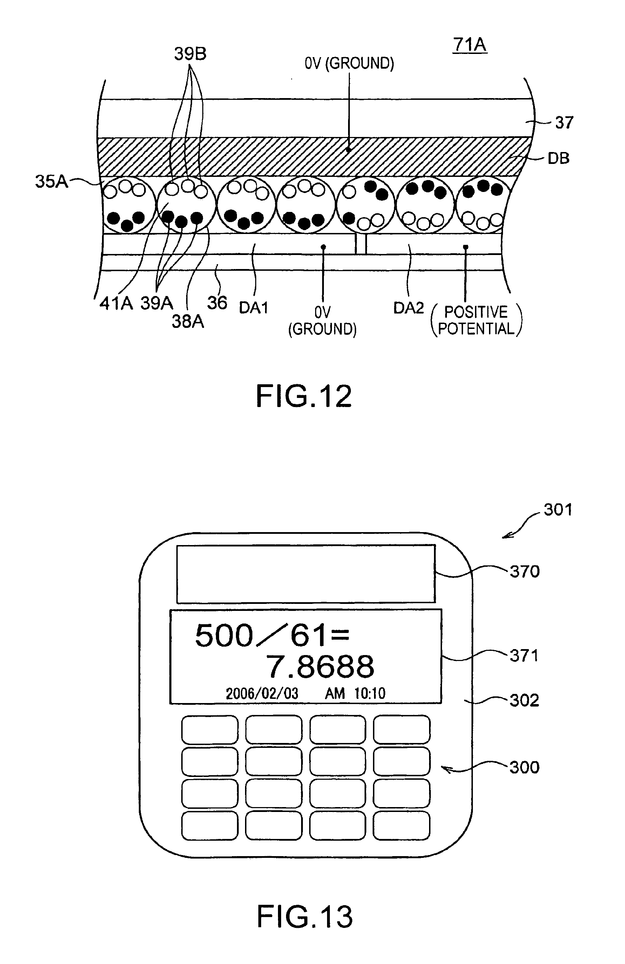

FIG. 12 is a section view of another display panel with memory 71. The display panels with memory 71, 171, and 271 described above are rendered using a single-particle electrophoretic display, but the same effect can be achieved using a two-particle electrophoretic display as shown in FIG. 12.

As shown in FIG. 12, the electrophoretic layer 35A contains many microcapsules 38A, and each of the microcapsules 38A contains an electrophoretic suspension 41A with black electrophoretic particles 39A ("black particles" below) and white electrophoretic particles 39B ("white particles"), thus rendering a so-called two particle electrophoretic display. These black particles 39A and white particles 39B are oppositely charged with the black particles 39A positive and the white particles 39B negative in this aspect of the invention.

If the display drive circuit holds the common electrode DB at 0 V (ground) and positively charges the segment electrode DA2, a field from the segment electrode DA2 to the common electrode DB results, the positively-charged black particles 39A in the microcapsules 38A [31, sic] in the area corresponding to the segment electrode DA2 migrate to the common electrode DB [25, sic], and the negatively-charged white particles 39B migrate to the segment electrode DA2.

If at this time the segment electrode DA1 is set to 0 V (ground) so that there is no potential difference between the common electrode DB and the segment electrode DA1, the electrophoretic particles (black particles 39A and white particles 39B) do not move and the display state is retained with no change in the display color.

Other operating states are also as described in the first embodiment above.

The display panels with memory 71, 171, and 271 are rendered using colloidal electronic paper above, but the invention is not so limited and a cholesteric liquid crystal display panel can be used.

The invention has been described using a segment display by way of example, but the invention can be similarly applied to a TFT active matrix display. In this case a transistor layer rendering the TFT (thin film transistor) active matrix display circuit is rendered on the mounting substrate 36, and dot matrix electrodes are rendered above the TFT layer instead of the segment electrodes DA1 and DA2 rendered on the mounting substrate 36 in the display panel with memory 71 shown in FIG. 5.

The invention is applied to a wristwatch in these embodiments of the invention, but the invention is not so limited and can be applied to a wide range of products including calculators, display devices, mobile computers such as PDA devices, cell phones, portable audio devices, and various kinds electronic devices that are worn on the wrist.

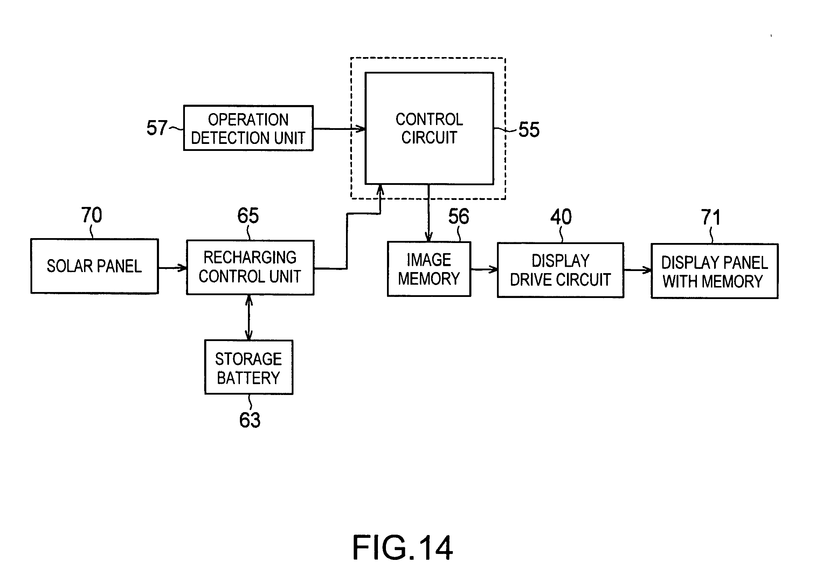

FIG. 13 is a plan view of the invention applied to a solar-powered calculator that has a timekeeping function. FIG. 14 is a block diagram showing the electrical arrangement of the solar-powered calculator.

A solar panel 370, display panel 371, and a keypad 300 are disposed on the front of the case 302 of the solar-powered calculator 301.

The display panel 371 retains the display state when the power supply to the display panel 371 stops. The timekeeping operation continues internally at this time.

The calculated result can therefore be retained even after the calculator is placed in a pocket or bag where the solar panel 370 is not exposed to light, there is no need to copy the displayed content to a note pad, and convenience is greatly improved because in addition to being used as a clock the calculator can be used as a memo pad.

The time is adjusted using long wave radio signals in the embodiments described above, but the invention is not so limited. More specifically, short wave radio signals or infrared signals such as used for GPS receivers, weather broadcasts, or Bluetooth devices can be used to adjust the time or receive information and to display information.

A timepiece having a solar panel that uses long-wave radio signals (a so-called solar-powered radio-controlled timepiece) is described above, but the invention can obviously also be used in a timepiece that only has a solar panel (a simple solar-powered timepiece).

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. A wristwatch comprising:
a display unit with memory that retains the display state of a last preceding display update operation; and
a solar cell for displaying operating power at least to the display unit with memory during the display update operation;
wherein the display unit with memory and the solar cell render a dial or a display panel.

2. The wristwatch described in claim 1, wherein the display surface of the display unit with memory and a light reception surface of the solar cell are disposed substantially on the same plane.

3. The wristwatch described in claim 1 or 2, wherein a virtual plane substantially parallel to a light reception surface of the solar cell and the display surface of the display unit with memory is defined, and the solar cell and display unit with memory are disposed so that orthogonal projections of the light reception surface of the solar cell and the display surface of the display unit with memory onto this virtual plane do not overlap.

4. The wristwatch described in any one of preceding claims 1 to 3, wherein a light reception surface of the solar cell and the display surface of the display unit with memory are rendered with one being round and the other having an annular shape surrounding the first.

5. The wristwatch described in any one of preceding claims 1 to 4, further comprising a mask member for covering and thereby masking a border between the solar cell and the display unit with memory.

6. The wristwatch described in any one of preceding claims 1 to 5, wherein the solar cell and the display unit with memory are rendered in unison as a module.

7. The wristwatch described in any one of preceding claims 1 to 6, wherein the display unit with memory displays at least either calendar information or world time information.

8. The wristwatch described in any one of preceding claims 1 to 7, further comprising:
an RF signal reception unit for receiving an information signal from an external source;
wherein the display unit with memory displays information contained in the received information signal.

9. The wristwatch described in claim 8, wherein the information contained in the information signal is image information; and
the display unit with memory displays an image corresponding to the image information.

10. The wristwatch described in claim 8 or claim 9, wherein the information contained in the information signal is time-setting information; and
the time-setting information receiving operation for receiving the time-setting information is prohibited when power output from the solar cell is less than or equal to a predetermined time-setting level.

11. The wristwatch described in any one of preceding claims 1 to 10, further comprising:
a decorative panel disposed on the front side of the light reception surface of the solar cell and the display surface of the display unit with memory;
wherein the decorative panel has decoration imparted thereto in an area corresponding to the light reception surface, and has a window or is transparent in an area corresponding to the display surface.

12. The wristwatch described in any one of preceding claims 1 to 11, wherein the display unit with memory is rendered using a colloidal electronic paper.

13. The wristwatch described in any one of preceding claims 1 to 12, wherein the display unit with memory is rendered using a cholesteric liquid crystal layer.

14. The wristwatch described in claim 12 or 13, wherein the display unit with memory is driven by a TFT active matrix drive method.

15. The wristwatch described in any one of preceding claims 1 to 14, wherein updating the display state of the display unit with memory is prohibited when solar cell output is less than or equal to a predetermined display level.

16. The wristwatch described in claim 15, wherein the display state of the display unit with memory is updated with priority when solar cell output again exceeds the predetermined display level.
